(19) Europäisches Patentamt

European Patent Office

Office européen des brevets

(11) **EP 0 943 906 B1**

(12) **FASCICULE DE BREVET EUROPEEN**

(45) Date de publication et mention
de la délivrance du brevet:
**15.12.2004 Bulletin 2004/51**

(51) Int Cl.⁷: **G01L 1/24**

(21) Numéro de dépôt: **98105085.9**

(22) Date de dépôt: **20.03.1998**

(54) **Capteur d'effort à fibre optique, procédé de fabrication d'un tel capteur, et dispositif de détection d'effort utilisant ce capteur**

Faseroptischer Kraftsensor, seine Herstellung und zugehörige Detektionseinrichtung

Fibre-optical force sensor, fabrication method and detection device using the sensor

(84) Etats contractants désignés:
**DE ES FR GB IT SE**

(43) Date de publication de la demande:
**22.09.1999 Bulletin 1999/38**

(73) Titulaire: **Talltec Technologies Holdings S.A.
2012 Luxembourg (LU)**

(72) Inventeur: **Bouamra, Mohamed
67100 Strasbourg (FR)**

(74) Mandataire: **Patry, Didier Marcel Pierre et al
I C B,
Ingénieurs Conseils en Brevets S.A.
Rue des Sors 7
2074 Marin (CH)**

(56) Documents cités:
**EP-A- 0 562 891          WO-A-93/04350**

• **PATENT ABSTRACTS OF JAPAN vol. 008, no. 137 (P-282), 26 juin 1984 & JP 59 037404 A (HITACHI DENSEN KK), 29 février 1984**

**Description**

La présente invention concerne un capteur a fibre optique utilisant l'effet des microcourbures d'une fibre pour mesurer un effort, ainsi qu'un procédé de fabrication d'un tel capteur. L'invention concerne également un dispositif de détection utilisant ce capteur.

Les techniques de détection par fibres optiques offrent, par rapport aux techniques courantes, un grand nombre d'avantages parmi lesquels on peut citer la compatibilité avec les systèmes de communication, l'insensibilité aux phénomènes électromagnétiques et, de manière générale, l'aptitude à fonctionner dans un environnement sévère.

Parmi les différents capteurs à fibres optiques existants, on connaît des capteurs dans lesquels une variation de la grandeur à mesurer se traduit par une modulation de l'intensité de la lumière transmise par la fibre optique, c'est-à-dire une modification de l'atténuation de cette fibre. Un type de capteur appartenant à cette catégorie est le capteur à microcourbures dans lequel l'atténuation de la fibre optique est provoquée par une modification locale de l'angle de courbure de la fibre sous l'effet de l'application d'une force ou d'une pression sur ledit capteur.

Le fonctionnement de ces capteurs est généralement satisfaisant lorsque ceux-ci sont fixés sur des substrats plans. Par contre, des difficultés apparaissent aussitôt que la surface du substrat sur lequel est posé le capteur n'est plus parfaitement plane. Des contraintes mécaniques liées à la courbure du substrat sur lequel repose le capteur apparaissent alors dans la fibre. Ces contraintes entraînent des modifications locales du rayon de courbure des fibres, une variation du pas d'enroulement de la fibre ou bien encore de la période du réseau de microcourbures. La sensibilité de détection n'est ainsi plus homogène sur toute la surface du capteur, ce qui conduit à une altération sensible de la précision de mesure.

On connaît par le document EP-A1-562 891 un capteur de pression à fibre optique selon le préambule de la revendication 1.

La présente invention a pour but de remédier aux problèmes et inconvénients ci-dessus en proposant un capteur à fibre optique utilisant l'effet des microcourbures d'une fibre pour mesurer un effort, le réseau de microcourbures conservant un pas constant qu'elle que soit la géométrie du substrat sur lequel est posé ce capteur.

A cet effet, la présente invention a pour objet un capteur à fibre optique pour la mesure d'un effort s'exerçant sur un substrat, ce capteur comprenant un support portant une fibre optique multimode dans laquelle l'atténuation de la lumière transmise est provoquée par une modification locale de l'angle de courbure ou microcourbure de la fibre sous l'effet de l'effort appliqué, ledit support présentant des zones de fortes et de moindres contraintes et étant cintré pour s'adapter au substrat courbe sur lequel il est posé, caractérisé en ce que le support portant la fibre optique présente un réseau périodique de perforations dans lesquelles la fibre optique est enfilée, la période et le rapport cyclique des microcourbures de la fibre qui est défini comme le rapport des longueurs de fibre optique correspondant à deux microcourbures successives, restant constants, lesdites perforations étant pratiquées dans les zones de fortes contraintes du support selon des directions privilégiées qui sont perpendiculaires au plan de courbure de ce support, le plan de courbure désignant le plan décrit par le rayon de courbure selon lequel le support portant la fibre optique est courbé, et lesdites perforations étant pratiquées selon des directions non privilégiées dans les zones de moindres contraintes du support.

Grâce à ces caractéristiques, la présente invention procure un capteur d'effort à fibre optique dont les performances sont indépendantes de la géométrie du support qui porte la fibre. Le support peut être une surface ouverte présentant par exemple des plis, des creux, ou des bosses, ou encore une surface fermée incurvée suivant des plans différents et de section transversale cylindrique ou de forme quelconque. Ce résultat est atteint en considérant que toute surface courbe peut être approchée par une succession de petits éléments de surface plans dont les dimensions sont des multiples entiers de la période du réseau de perforations pratiquées dans le support. La fibre optique échappe ainsi à toute contrainte mécanique induite par la courbure du support, et le réseau de microcourbures de la fibre conserve un pas constant. La sensibilité de détection reste donc homogène sur toute la surface du capteur, ce qui procure un capteur omnidirectionnel et conduit à une grande précision de mesure.

Selon une autre caractéristique de l'invention, la période du réseau de perforations est choisie de façon à favoriser les couplages entre modes guidés dans le coeur de la fibre et modes rayonnés vers l'extérieur de ladite fibre.

La présente invention concerne également un procédé de fabrication du capteur ci-dessus, caractérisé en ce que l'on pratique sur le support portant la fibre optique un réseau périodique de perforations dans lesquelles la fibre optique est enfilée, la période et le rapport cyclique des microcourbures de la fibre restant constants, lesdites perforations étant pratiquées dans les zones de fortes contraintes du support selon des directions privilégiées définies par l'intersection dudit support avec le plan contenant le rayon de courbure et perpendiculaire au plan de courbure de ce support, et lesdites perforations étant pratiquées selon des directions non privilégiées dans les zones de moindres contraintes du support.

Selon un autre aspect encore, l'invention concerne un dispositif de détection d'effort comprenant le capteur à fibre optique ci-dessus, une source de lumière pour envoyer dans la fibre optique une onde lumineuse, et un dispositif de photodétection permettant de délivrer une information relative à l'intensité lumineuse transmise par la fibre.

Selon une première variante d'exécution de l'invention, le support portant la fibre est un tube creux cintré pour s'adapter à un support courbe, et les perforations dans lesquelles la fibre est enfilée sont pratiquées selon des directions non privilégiées dans les zones de moindres contraintes dudit tube qui s'étendent de part et d'autre du plan de symétrie axiale du tube, au voisinage de l'axe neutre de celui-ci.

Selon une seconde variante d'exécution de l'invention, le support portant la fibre optique est un tube creux à l'intérieur duquel est introduit un cylindre de façon à former un tube plein, le réseau de perforations étant pratiqué comme ci-dessus.

Selon encore une autre variante, le support portant la fibre optique est une bande mince sur laquelle le réseau de perforations est pratiqué selon des directions non privilégiées, cette bande étant insérée longitudinalement entre deux sections de cylindre de façon à former un tube plein.

Selon une autre caractéristique de l'invention, le support et la fibre optique qu'il porte sont enveloppés dans une gaine de protection mécanique servant à transmettre l'effort à mesurer au capteur selon l'invention et conférant à celui-ci la forme recherchée.

D'autres caractéristiques et avantages de la présente invention apparaîtront plus clairement à la lecture de la description détaillée qui suit d'un exemple de réalisation du capteur de force à fibre optique selon l'invention, cet exemple étant donné à titre purement illustratif et non limitatif, en liaison avec les dessins annexés dans lesquels :

- la figure 1 est une vue de principe en perspective d'un support de forme quelconque sur lequel est pratiqué un réseau de perforations selon l'invention dans lesquelles est enfilée une fibre optique;
- la figure 2 est une vue en perspective d'un tube cintré sur lequel sont représentées les lignes de fortes et de moindres contraintes;
- la figure 3 est une vue en perspective d'un support conformé en tube creux sur lequel est pratiqué un réseau de perforations selon l'invention dans lesquelles est enfilée une fibre optique;
- la figure 4 est une vue en coupe axiale du tube creux de la figure 3;
- la figure 5 est une vue en perspective d'un support conformé en bande mince inséré longitudinalement entre deux sections de cylindre de façon à former un tube plein;
- la figure 6 est une vue schématique d'un dispositif de détection d'effort utilisant le capteur à fibre optique selon l'invention en mode transmission;
- les figures 7 et 8 sont des vues schématiques d'un dispositif de détection d'effort utilisant le capteur à fibre optique selon l'invention en mode réflexion;
- la figure 9 est une vue schématique d'un dispositif de détection d'effort utilisant le capteur à fibre optique selon l'invention en mode réflexion/transmission;
- les figures 10, 11 et 12 sont des vues schématiques d'un dispositif de détection d'effort utilisant une pluralité de capteurs à fibres optiques selon l'invention associés en réseau, et
- les figures 13 et 14 sont des vues schématiques d'un dispositif de détection d'effort utilisant le capteur à fibre optique selon l'invention via une fibre optique de référence.

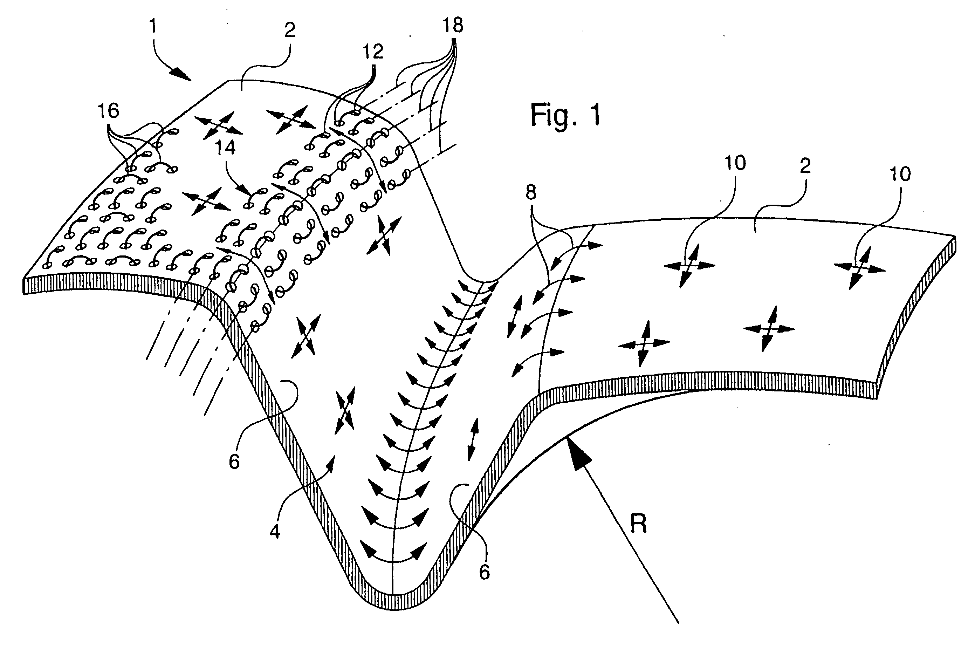

La figure 1 est une vue de principe en perspective d'un support de forme géométrique quelconque destiné à être appliqué sur un substrat (non représenté) de forme complémentaire. Ce support, désigné dans son ensemble par la référence numérique générale 1, comprend par exemple deux ailes telles que 2 sensiblement planes et horizontales, reliées entre elles par un canal 4 dont les flancs tels que 6 forment sensiblement un V. Les contraintes mécaniques les plus fortes se concentrent dans le support 1 au niveau des zones de raccordement des ailes 2 aux flancs 6 et de la jonction des deux flancs 6 en fond de canal 4. Les lignes de plus fortes contraintes sont représentées sur la figure 1 par une série de doubles flèches telles que 8 qui s'étendent sensiblement transversalement au support 1. De même, les doubles flèches telles que 10 qui s'étendent longitudinalement au support 1 représentent les lignes de moindres contraintes de ce support 1. On peut remarquer que les directions de fortes et de moindres contraintes dans le support 1 sont généralement perpendiculaires entre elles dans les zones de fortes contraintes.

On considérera dans ce qui suit que l'ensemble formé par chaque aile 2 et le flanc 6 du canal 4 auquel cette aile est reliée peut être représenté en première approximation par un profil géométrique circulaire dont le rayon de courbure est désigné par $\underline{R}$ sur les figures. On pratique alors dans le support 1 un réseau de perforations telles que 12 dans lesquelles une fibre optique 14 est enfilée. La fibre optique 14 est enfilée successivement dans chaque perforation 12 à la façon d'un tissage, passant alternativement au-dessus, puis en dessous de la surface du support 1. On forme ainsi localement dans la fibre optique 14 une succession de courbures ou microcourbures telles que 16 dont la modification de l'angle de courbure sous l'effet d'une force ou d'une pression appliquée sur le support 1 provoque de manière connue en soi une modification de l'atténuation de la fibre optique 14.

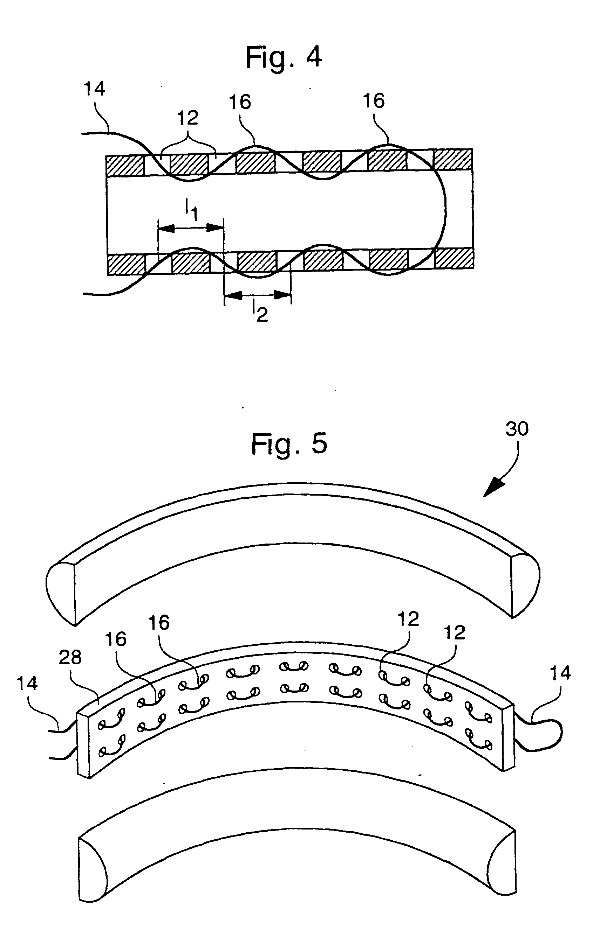

Selon une première caractéristique importante de l'invention, le réseau de perforations 12 est pratiqué de sorte que la période des microcourbures 16 soit constante, et conduise à un rapport cyclique $l_1/l_2$ des microcourbures 16 également constant et de préférence égal à 1. Par rapport cyclique des microcourbures 16 on entend le rapport des longueurs $l_1$ et $l_2$ de fibre optique 14 correspondant à deux microcourbures 16 successives (voir également figure 4).

Sur les parties planes des ailes 2 et des flancs 6 du support 1, loin des zones de fortes contraintes mécaniques, le réseau de perforations 12 peut suivre des directions quelconques, non privilégiées. Par contre, et conformément à l'autre caractéristique importante de l'invention, les perforations 12 sont pratiquées dans les zones de fortes contraintes du support 1 le long de lignes telles que 18 représentées en traits mixtes sur la figure 1, ces lignes 18 étant définies par l'intersection du support 1 avec le plan contenant le rayon de courbure R et perpendiculaire au plan de courbure dudit support 1. Grâce à cette disposition particulièrement avantageuse de l'invention, les microcourbures 16 de la fibre optique 14 échappent à toute contrainte mécanique induite par la courbure du support 1, cintré pour pouvoir s'adapter au profil du substrat sur lequel il est destiné à être posé. Le rapport cyclique des microcourbures 16 est conservé en tout point, ce qui permet de garantir que la sensibilité du capteur ainsi constitué restera homogène sur toute sa surface, et donc d'atteindre une grande précision de mesure.

La périodicité du réseau de perforations 12 sera de préférence choisie de façon à favoriser les couplages entre modes guidés et modes rayonnés dans la fibre optique 14. Le rapport cyclique des microcourbures 16 est adapté à la période de la perturbation. Les caractéristiques élastiques du support 1 sont adaptées à l'intensité des contraintes appliquées. Le support 1 doit pouvoir se déformer sous l'effet de la contrainte appliquée sans entraîner la cassure de la fibre optique 14, et présenter un retour rapide à sa forme initiale d'équilibre. Le support 1 et la fibre optique 14 qu'il porte sont enveloppés dans une gaine de protection mécanique (non représentée) dont les caractéristiques d'élasticité sont adaptées à celles dudit support 1. Cette gaine de protection sert à transmettre l'effort à mesurer au capteur et à conférer à celui-ci la forme recherchée.

Dans tout ce qui suit, les éléments identiques à ceux décrits précédemment seront désignés par les mêmes références numériques.

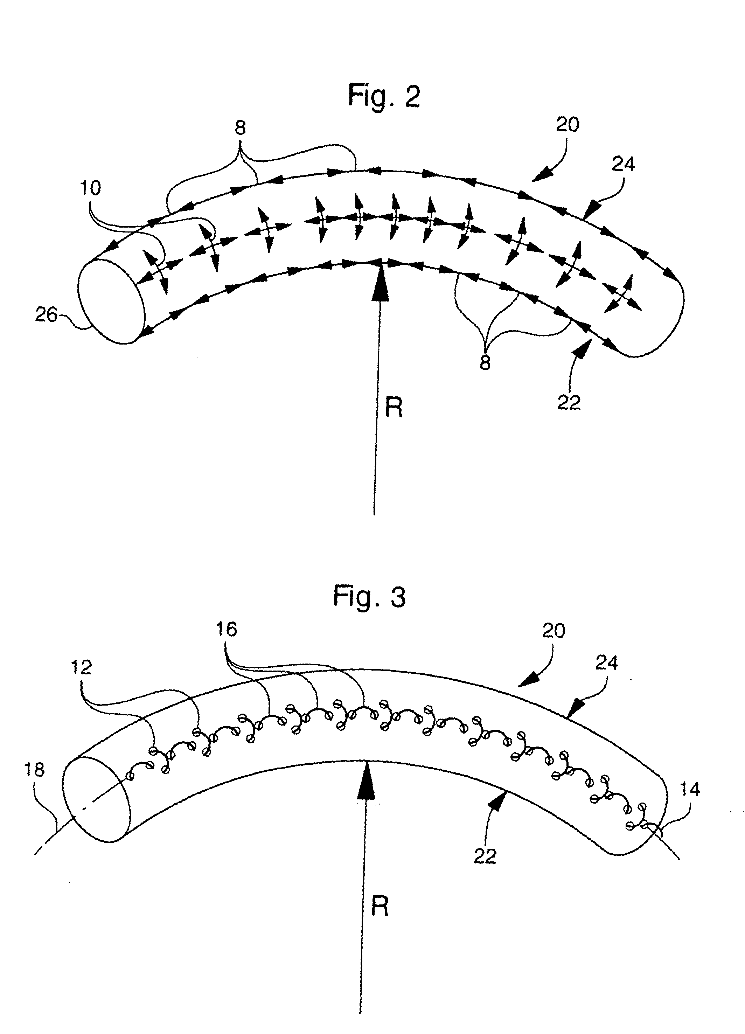

La figure 2 est une vue en perspective d'un tube creux désigné par la référence numérique 20, cintré selon un rayon de courbure R. Dans ce tube 20 qui illustre un exemple de support présentant une surface fermée, les contraintes mécaniques les plus élevées, représentées par une série de doubles flèches 8, apparaissent le long de deux arêtes longitudinales respectivement inférieure 22 et supérieure 24 s'étendant dans le plan de symétrie axiale du tube 20. De même, les doubles flèches 10 qui s'étendent tangentiellement au diamètre 26 du tube 20 représentent les directions de moindres contraintes dans ledit tube 20. On peut à nouveau remarquer que, comme dans le cas précédent, les directions de plus fortes et de moindres contraintes sont sensiblement perpendiculaires entre elles dans les zones de forte contraintes .

En tenant compte de ce qui précède, et comme représenté sur les figures 3 et 4, on pratique dans le tube creux 20 un réseau de perforations 12 de sorte que la période des microcourbures 16 de la fibre optique 14 reste constante, et conduise à un rapport cyclique $l_1/l_2$ des microcourbures 16 également constant et préférentiellement égal à 1. Il faut en outre remarquer que, toujours en accord avec l'invention, les perforations 12 sont pratiquées selon des directions non privilégiées le long des lignes 18 qui s'étendent de part et d'autre du plan de symétrie axiale du tube 20, à distance des arêtes longitudinales 22 et 24 du tube 20 le long desquelles se concentrent les contraintes mécaniques les plus élevées. Les microcourbures 16 de la fibre optique 14 sont ainsi disposées dans les zones de moindres contraintes du tube 20, de sorte que leur rapport cyclique $l_1/l_2$ est conservé lorsque le tube 20 est cintré pour s'adapter à un support courbe, ce qui garantit une sensibilité homogène du capteur sur toute sa surface.

Selon une seconde variante d'exécution de l'invention (non représentée), le support portant la fibre optique est un tube creux analogue à celui décrit ci-dessus à l'intérieur duquel est introduit un cylindre de façon à former un tube plein. Le réseau de perforations est pratiqué comme ci-dessus selon des directions non privilégiées qui s'étendent de part et d'autre du plan de symétrie axiale du tube creux, à distance des arêtes du tube le long desquelles se concentrent les contraintes mécaniques les plus élevées.

Selon encore une autre variante d'exécution représentée sur la figure 5, le support portant la fibre optique est une bande mince 28 sur laquelle le réseau de perforations 12 est pratiqué selon des directions non privilégiées, cette bande 28 étant ensuite insérée longitudinalement entre deux sections de cylindre de façon à former un tube plein 30. Le réseau de perforations 12 est à nouveau pratiqué de sorte que la période des microcourbures 16 soit constante sur toute la longueur de la bande 28, et conduise à un rapport cyclique $l_1/l_2$ des microcourbures 16 également constant et de préférence égal à 1. Les microcourbures 16 étant proches de l'axe neutre où les contraintes mécaniques engendrées par la flexion du tube plein 30 ainsi constitué sont minimales, leur rapport cyclique $l_1/l_2$ est ici aussi conservé.

Conformément au procédé selon l'invention, les réseaux de perforations 12 sont pratiqués par découpe au jet d'eau, de préférence au moyen d'une machine de découpage à jet d'eau programmable. Cette technique permet d'atteindre une résolution et une reproductibilité satisfaisantes. Par ailleurs, l'utilisation d'une telle machine programmable permet de s'adapter aisément à la réalisation de supports de formes quelconques sur demande, ce qui permet de diminuer considérablement le prix de revient des capteurs. Par ailleurs, les lignes 18 selon lesquelles les perforations 12 sont pratiquées peuvent être programmées, ce qui confère une grande souplesse d'utilisation, offre la possibilité d'adapter l'invention à des profils de supports variés, et permet de réaliser des économies notables sur les coûts de fabrication.

Dans tout ce qui suit, on désignera par capteur 32 l'ensemble formé par le support 1 ou les tubes 20 et 30 et la fibre optique 14 qu'ils portent conformément aux enseignements de la présente invention.

Ces capteurs 32 peuvent fonctionner au choix en mode transmission, en mode réflexion ou en mode mixte transmission/réflexion. Ils sont intégrés dans un dispositif de détection d'effort 34 comprenant notamment une source lumineuse 36 pour envoyer dans la fibre optique 14 une onde lumineuse, et un dispositif de photodétection 38 permettant de délivrer une information relative à l'intensité lumineuse transmise par ladite fibre 14.

Selon le mode de fonctionnement choisi, deux types de sources lumineuses 36 peuvent êtres choisies. Il peut s'agir d'une diode électroluminescente (LED) à faible cohérence spatiale et temporelle. Ce type de source lumineuse 36 est particulièrement bien adapté à l'utilisation de fibres optiques 14 multimodes présentant des diamètres de coeur et des ouvertures numériques importantes qui permettent l'injection de puissances optiques adaptées. Un large diagramme de rayonnement et une surface active importante sont les autres avantages de ce type de sources lumineuses 36 qui peuvent alimenter plusieurs capteurs 32 à la fois. Un autre avantage important est le coût très bas de ces sources.

Un autre type de source lumineuse 36 concerne les diodes laser multimodes. Ce sont des sources couramment utilisées dans les lecteurs optiques tels que les lecteurs de disques compacts audio, les lecteurs de CD-ROM ou autres et qui, de ce fait, sont actuellement commercialisées à bas prix. Ces diodes laser fournissent une puissance d'émission optique importante et sont équipées de photodiodes pour le contrôle de cette puissance. Ces photodiodes peuvent être utilisées pour mesurer des signaux rétroréfléchis, ce qui permet de simplifier la configuration du dispositif de détection d'effort 34, de réduire son encombrement et de diminuer son prix de revient. Pour pouvoir coupler plusieurs fibres optiques 14 à la fois sur la même source 36, il est nécessaire d'insérer un dispositif expanseur de faisceau constitué, par exemple, de microlentilles.

La fibre optique 14 utilisée présentera de préférence un profil d'indice à gradient parabolique. En effet, dans ce type de fibre, la distribution des modes qui s'y propagent dépend beaucoup moins de l'angle d'injection des ondes lumineuses que dans le cas des fibres à saut d'indice. L'ensemble des modes est ainsi excité sur une faible longueur de fibre. L'obtention de cette distribution modale d'équilibre est également assurée par le fait qu'il existe pour ces fibres une longueur d'onde de perturbation unique permettant de coupler tous les modes entre eux. Ceci assure une meilleure garantie de reproductibilité de la réponse du capteur 32. Une fibre à saut d'indice peut néanmoins être utilisée sous réserve que la longueur d'onde de perturbation soit choisie de façon à produire un couplage entre modes guidés et modes rayonnants.

Le dispositif de photodétection 38 est du genre des cellules couramment utilisées dans les dispositifs de commande à distance. La surface du détecteur 38 doit être suffisamment grande pour pouvoir détecter la totalité du faisceau optique.

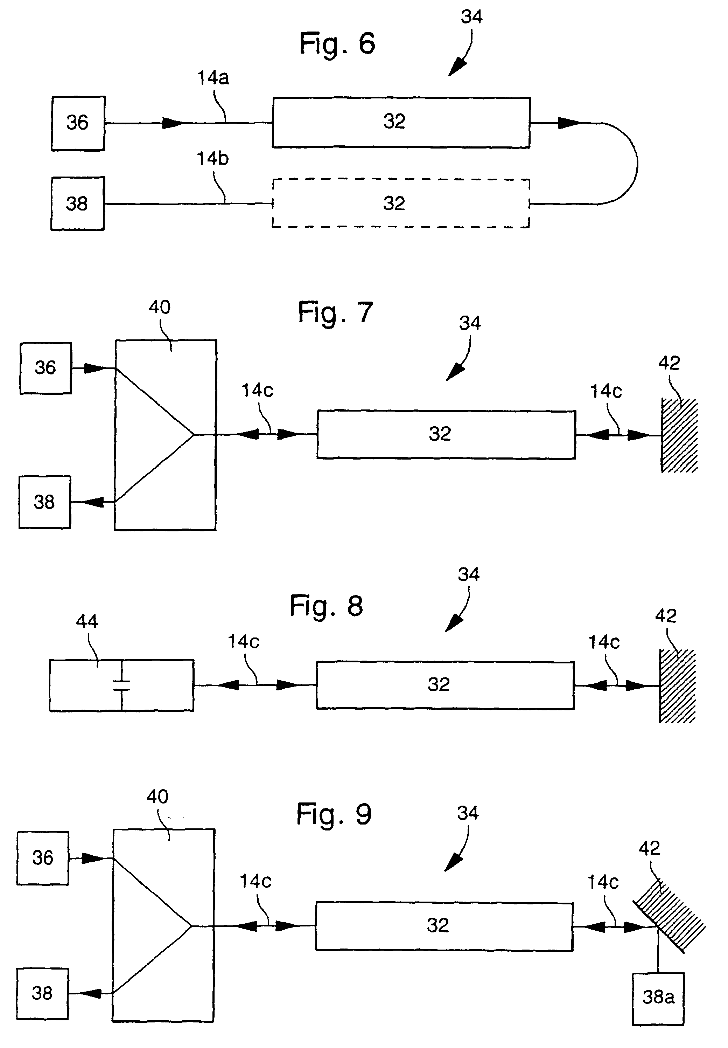

Le dispositif de détection d'effort 34 représenté sur la figure 6 utilise le capteur 32 selon l'invention en mode transmission. Le dispositif 34 comprend à cet effet un premier segment 14a de fibre optique pour amener le signal optique depuis la source lumineuse 36 au capteur 32, et un second segment 14b de fibre optique pour acheminer le signal optique transmis par ledit capteur 32 vers le dispositif de photodétection 38. Comme il ressort de la figure 6, le segment 14b de fibre optique peut repasser par le capteur 32 et subir deux fois l'effet de la contrainte appliquée.

Lorsque le dispositif de détection d'effort 34 fonctionne en mode réflexion (figure 7), une fibre unique 14c est utilisée comme ligne de transmission du signal optique. A cet effet, un dispositif séparateur de faisceau ou coupleur 40 permet d'envoyer le signal optique dans la fibre 14c en direction du capteur 32 puis, au retour, de diriger ce signal vers le dispositif de photodétection 38 après qu'il ait été rétroréfléchi par un dispositif réflecteur 42 tel que, par exemple, un miroir réfléchissant, à l'extrémité de la fibre 14c. Le coupleur 40 peut être constitué soit d'une lame séparatrice de faisceau, soit d'un coupleur à fibre optique. Il est alors préférable d'utiliser une source faiblement cohérente et peu coûteuse telle qu'une diode électroluminescente. Selon une variante représentée sur la figure 8, on utilise une diode laser ou superluminescente 44 comme source lumineuse. Comme décrit ci-dessus, ces diodes 44 comportent des cellules photodétectrices pour stabiliser l'intensité du faisceau optique émis. Ces cellules photodétectrices peuvent ainsi être utilisées pour détecter le signal optique rétroréfléchi, ce qui permet de s'affranchir du coupleur 40.

On représente sur la figure 9 un dispositif de détection d'effort 34 fonctionnant en mode mixte transmission/réflexion. Ce dispositif 34 comprend une source lumineuse 36 et deux dispositifs de photodétection 38 et 38a qui vont mesurer l'un le signal optique rétroréfléchi, et l'autre le signal optique transmis. Durant le trajet depuis la source 36 vers le dispositif réflecteur 42, le signal optique subit une première rétroréflexion ainsi que des pertes par radiation au niveau du capteur 32. Arrivé à l'extrémité de la fibre optique 14c, le signal se décompose en deux parties : une première partie rétroréfléchie vers le capteur 32, et une seconde partie directement transmise au dispositif de photodétection 38a. Durant le trajet retour, le signal optique subira à nouveau une rétroréflexion et des pertes par radiation dans le capteur 32.

Il est possible d'associer plusieurs capteurs 32 selon l'invention fonctionnant selon les modes décrits précédemment soit en série, soit en parallèle.

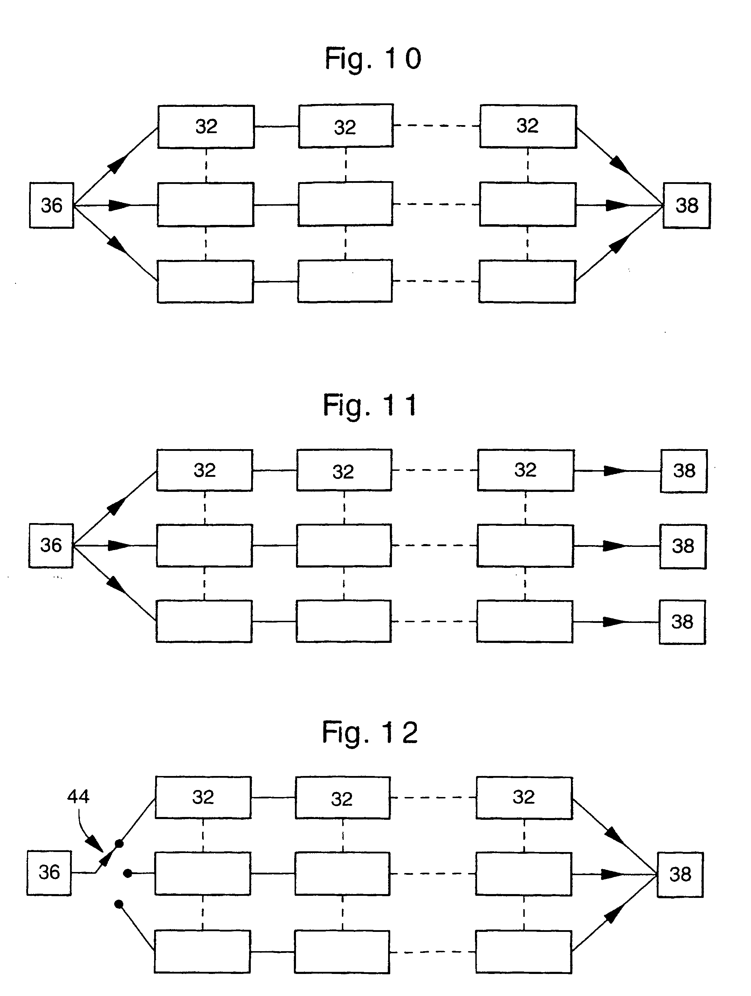

On représente sur la figure 10 une configuration à plusieurs capteurs 32 non discernables avec source lumineuse 36 et dispositif de photodétection 38 uniques.

On représente sur la figure 11 une configuration à plusieurs capteurs 32 discernables avec une source lumineuse 36 unique et plusieurs dispositifs de photodétection 38.

On représente sur la figure 12 une configuration à plusieurs capteurs 32 non discernables avec une source lumineuse 36 et un dispositif de photodétection 38 uniques, et un interrupteur optique 46. Cet interrupteur 46 met en oeuvre des techniques d'optique diffractive plane et peut ainsi être facilement dupliquer sur des matériaux plastiques au moyen d'une matrice.

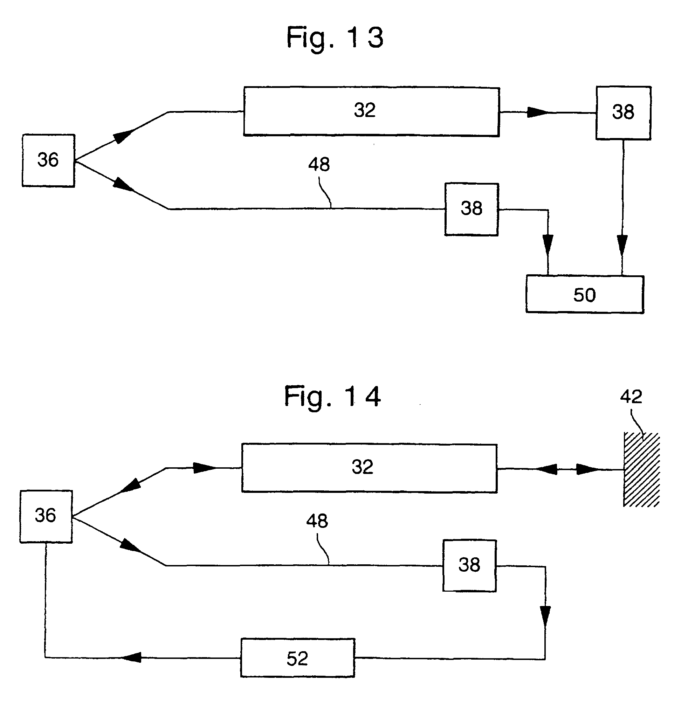

La réponse du capteur 32 selon l'invention dépend d'un certain nombre de paramètres parmi lesquels on peut citer la géométrie du substrat sur lequel sera déposé ledit capteur 32, la température ambiante qui peut faire varier les caractéristiques d'émission de la source lumineuse 36 et le vieillissement des composants. Pour remédier à ces inconvénients, il est proposé (figure 13) d'utiliser une fibre optique de référence 48 qui ne sera pas soumise à l'effort, force ou pression, à mesurer. En admettant que les pertes induites dans la fibre de référence 48 sont représentatives de celles produites par le capteur 32, il est possible de s'affranchir de ces effets indésirables en effectuant, par exemple, le rapport des signaux de référence et de mesure au moyen d'un ratiomètre 50. Il est également possible (figure 14) d'effectuer une contre-réaction sur la source lumineuse 36 de façon à contrôler son courant de polarisation et à maintenir sa puissance à un niveau constant préalablement défini au moyen d'un dispositif de stabilisation 52.

Un étalonnage préalable du capteur 32 est nécessaire. Cette procédure suppose que la réponse du capteur 32 soit linéaire dans la gamme d'efforts à mesurer et consiste :

- d'une part, à commander, en l'absence de contrainte mécanique, une variation du courant de polarisation de la source lumineuse 36 suffisamment faible pour pouvoir obtenir une variation proportionnelle de la puissance d'émission. La variation de puissance détectée est ensuite comparée à la variation qu'aurait produit un capteur étalon dans les mêmes conditions. On peut alors, de cette façon, ajuster le gain de l'amplificateur pour régler la sensibilité du capteur 32;

- d'autre part, toujours en l'absence de contrainte, à régler au moyen d'une tension d'offset ajustable le niveau de sortie à une valeur prédéterminée, identique pour tous les capteurs 32.

## Revendications

1. . Capteur à fibre optique pour la mesure d'un effort s'exerçant sur un substrat, comprenant un support (1) portant une fibre optique multimode (14) dans laquelle l'atténuation de la lumière transmise est provoquée par une modification locale de l'angle de courbure ou microcourbure (16) de la fibre (14) sous l'effet de l'effort appliqué, ledit support (1) présentant des zones de fortes et de moindres contraintes et étant cintré pour s'adapter au substrat courbe sur lequel il est posé, dans lequel le support (1) portant la fibre optique (14) présente un réseau périodique de perforations (12) dans lesquelles la fibre optique (14) est enfilée, la période et le rapport cyclique ($l_1/l_2$) des microcourbures (16) de la fibre (14) qui est défini comme le rapport des longueurs $l_1$ et $l_2$ de fibre optique (14) correspondant à deux microcourbures (16) successives, restant constants, lesdites perforations (12) étant pratiquées dans les zones de fortes contraintes du support (1) selon des directions privilégiées qui sont perpendiculaires au plan de courbure de ce support (1), le plan de courbure désignant le plan décrit par le rayon de courbure (R) selon lequel le support (1) portant la fibre optique (14) est courbé, et lesdites perforations (12) étant pratiquées selon des directions non privilégiées dans les zones de moindres contraintes du support (1).

2. Capteur selon la revendication 1, **caractérisé en ce que** la période du réseau de perforations (12) est choisie de façon à favoriser les couplages entre modes guidés dans le coeur de la fibre (14), c'est-à-dire les rayons lumineux qui se propagent dans le coeur de la fibre (14) par réflexions successives, et modes rayonnées vers l'extérieur de ladite fibre (14), c'est-à-dire les rayons lumineux issus du coeur de la fibre (14) et qui se propagent en direction de la gaine de la fibre, de sorte que, pour une fibre à saut d'indice, il sera observé un couplage entre modes guidés et modes rayonnés si :

$$2\pi/T \geq 1/\rho^2 \; kn_1 + 2\;\sqrt{\Delta/\rho}$$

où

| | |
|---|---|
| T | est la période du réseau de perforations, |
| $\rho$ | est le rayon du coeur de la fibre, |
| $k = 2\pi\lambda$ | est la constante de propagation des modes lumineux, où $\lambda$ est la longueur d'onde desdits modes lumineux, |
| $n_1$ | est l'indice optique du coeur de la fibre, et |
| $\Delta = n_1 - n_2/n_1$ | est la différence relative des indi- |

ces des matériaux de coeur $n_1$ et de gaine $n_2$ de la fibre optique,

et de sorte que, pour une fibre à gradient d'indice, sera observé un couplage entre modes guidés et modes rayonnés si :

$$T = \rho \pi \sqrt{2/\Delta}$$

3. Capteur selon l'une quelconque des revendications 1 ou 2, **caractérisé en ce que** le support portant la fibre optique (14) est un tube creux (20), et **en ce que** les perforations (12) sont pratiquées selon des directions non privilégiées dans les zones de moindres contraintes qui s'étendent de part et d'autre du plan de symétrie axiale du tube (20) qui est le plan passant par l'axe de symétrie longitudinale de ce tube.

4. Capteur selon la revendication 3, **caractérisé en ce qu'**un cylindre est introduit dans le tube creux (20) de façon à former un tube plein.

5. Capteur selon l'une quelconque des revendications 1 ou 2, **caractérisé en ce que** le support portant la fibre optique (14) est une bande mince (28) sur laquelle le réseau de perforations (12) est pratiqué selon des directions non privilégiées, cette bande (28) étant insérée longitudinalement entre deux sections de cylindre de façon à former un tube plein (30).

6. Capteur selon l'une quelconque des revendications précédentes, **caractérisé en ce que** le rapport cyclique ($l_1/l_2$) des microcourbures (16) de la fibre optique (14) est égal à 1.

7. Capteur selon l'une quelconque des revendications précédentes, **caractérisé en ce que** la fibre optique (14) présente un profil d'indice à gradient parabolique.

8. Capteur selon l'une quelconque des revendications 1 à 6, **caractérisé en ce que** la fibre optique (14) est une fibre à saut d'indice.

9. Capteur selon l'une quelconque des revendications précédentes, **caractérisé en ce que** le support (1) et la fibre optique (14) qu'il porte sont enveloppés dans une gaine de protection mécanique dont les caractéristiques d'élasticité sont adaptées à celles dudit support (1), cette gaine servant à transmettre l'effort à mesurer audit capteur et conférant à celui-ci la forme recherchée

10. Procédé de fabrication d'un capteur à fibre optique selon l'une quelconque des revendications précédentes, **caractérisé en ce que** l'on pratique sur le support (1, 20, 28) portant la fibre optique (14) un réseau périodique de perforations (12) dans lesquelles la fibre optique (14) est enfilée, ces perforations (12) étant pratiquées dans les zones de fortes contraintes du support (1) selon des directions privilégiées qui sont perpendiculaires au plan de courbure de ce support (1), le plan de courbure désignant le plan décrit par le rayon de courbure (R) selon lequel le support (1) portant la fibre optique (14) est courbé, et lesdites perforations (12) étant pratiquées selon des directions non privilégiées dans les zones de moindres contraintes du support (1).

11. Dispositif de détection d'effort, **caractérisé en ce qu'**il comprend un capteur à fibre optique selon l'une quelconque des revendications 1 à 9 précédentes, une source lumineuse (36) pour envoyer dans la fibre optique (14) une onde lumineuse, et un dispositif de photodétection (38) permettant de délivrer une information relative à l'intensité lumineuse transmise par ladite fibre (14).

12. Dispositif selon la revendication 11, **caractérisé en ce qu'**il utilise une fibre optique de référence (48) qui n'est pas soumise à l'effort, force ou pression, à mesurer.

13. Dispositif selon la revendication 12, **caractérisé en ce qu'**il comprend un ratiomètre (50).

14. Dispositif selon la revendication 12, **caractérisé en ce qu'**il comprend une contre-réaction sur la source lumineuse (36) de façon à contrôler le courant de polarisation de celle-ci et à maintenir sa puissance à un niveau constant préalablement défini au moyen d'un dispositif de stabilisation (52).

15. Procédé d'étalonnage d'un dispositif de détection d'effort selon l'une quelconque des revendications 11 à 14 précédentes, **caractérisé en ce qu'**il comprend les étapes qui consistent à :

- commander, en l'absence de contrainte mécanique, une variation du courant de polarisation de la source lumineuse (36) suffisamment faible pour pouvoir obtenir une variation proportionnelle de la puissance d'émission, cette variation de puissance étant ensuite comparée à la variation produite par un capteur étalon dans les mêmes conditions, et
- régler, toujours en l'absence de contrainte, au moyen d'une tension d'offset ajustable le niveau de sortie des capteurs à une valeur prédéterminée identique.

**Patentansprüche**

1. Lichtleitfaser-Sensor für die Messung einer Belastung, die auf ein Substrat ausgeübt wird, mit einem Träger (1), der eine Multimoden-Lichtleitfaser (14) trägt, in der die Dämpfung des übertragenen Lichts durch eine lokale Modifikation des Krümmungswinkels oder der Mikrokrümmung (16) der Faser (14) unter der Wirkung der ausgeübten Belastung hervorgerufen wird, wobei der Träger (1) Zonen mit stärkeren und schwächeren Beanspruchungen aufweist und gebogen ist, um sich an das gekrümmte Substrat, auf das er gelegt ist, anzupassen, wobei in dem Sensor der die Lichtleitfaser (14) tragende Träger (1) ein periodisches Gitter aus Perforationen (12) aufweist, in die die Lichtleitfaser (14) eingefädelt ist,
wobei die Periode und das zyklische Verhältnis ($l_1/l_2$) der Mikrokrümmungen (16) der Faser (14), das als das Verhältnis der Längen ($l_1$ und $l_2$) der Lichtleitfaser (14), die zwei aufeinander folgenden Mikrokrümmungen (16) entsprechen, definiert ist, konstant bleiben, wobei die Perforationen (12) in den Zonen stärkerer Beanspruchungen des Trägers (1) in bevorzugten Richtungen, die zur Krümmungsebene dieses Trägers (1) senkrecht sind, ausgebildet sind, wobei die Krümmungsebene die Ebene bezeichnet, die durch den Krümmungsradius (R) beschrieben ist, längs dessen der die Lichtleitfaser (14) tragende Träger (1) gekrümmt ist, wobei die Perforationen (12) in den Zonen mit schwächeren Beanspruchungen des Trägers (1) in nicht bevorzugten Richtungen ausgebildet sind.

2. Sensor nach Anspruch 1, **dadurch gekennzeichnet, dass** die Gitterperiode der Perforationen (12) in der Weise gewählt ist, dass die Kopplungen zwischen geführten Moden im Kern der Faser (14), d. h. der Lichtstrahlen, die sich im Kern der Faser (14) durch aufeinander folgende Reflektionen ausbreiten, und nach außen gestrahlte Moden der Faser (14), d. h. der Lichtstrahlen, die vom Kern der Faser (14) abgegeben werden und sich in Richtung der Hülle der Faser ausbreiten, begünstigt werden, derart, dass für eine Faser mit Indexsprung eine Kopplung zwischen geführten Moden und abgestrahlten Moden beobachtet wird, falls:

$$2\pi/T = 1/\rho^2 kn_1 + 2\sqrt{\frac{\Delta}{\rho}}$$

wobei

T          die Gitterperiode der Perforationen ist,
$\rho$          der Radius des Kerns der Faser ist,

$k = 2\pi\lambda$          die Ausbreitungskonstante der Lichtmoden ist, wobei $\lambda$ die Wellenlänge der Lichtmoden ist,
$n_1$          der optische Index des Kerns der Faser ist und
$\Delta = n_1 - n_2/n_1$          die relative Differenz der Indizes der Materialien des Kerns $n_1$, und der Hülle, $n_2$ der Lichtleitfaser ist,

und derart, dass für eine Faser mit Indexgradienten eine Kopplung zwischen geführten Moden und abgestrahlten Moden beobachtet wird, falls:

$$T = \rho\pi\sqrt{\frac{2}{\Delta}}$$

3. Sensor nach einem der Ansprüche 1 oder 2, **dadurch gekennzeichnet, dass** der die Lichtleitfaser (14) tragende Träger ein Hohlrohr (20) ist und dass die Perforationen (12) in den Zonen mit schwächeren Beanspruchungen, die sich beiderseits der axialen Symmetrieebene des Rohrs (20), die die durch die longitudinale Symmetrieachse dieses Rohrs verlaufende Ebene ist, erstrecken, in nicht bevorzugten Richtungen ausgebildet sind.

4. Sensor nach Anspruch 3, **dadurch gekennzeichnet, dass** in das Hohlrohr (20) ein Zylinder eingeführt ist, um ein Vollrohr zu bilden.

5. Sensor nach einem der Ansprüche 1 oder 2, **dadurch gekennzeichnet, dass** der die Lichtleitfaser (14) tragende Träger ein dünnes Band (28) ist, in dem das Gitter aus Perforationen (12) in nicht bevorzugten Richtungen ausgebildet ist, wobei dieses Band (28) longitudinal zwischen zwei Zylinderabschnitten eingefügt ist, derart, dass ein Vollrohr (30) gebildet wird.

6. Sensor nach einem der vorhergehenden Ansprüche, **dadurch gekennzeichnet, dass** das zyklische Verhältnis ($l_1/l_2$) der Mikrokrümmungen (16) der Lichtleitfaser (14) gleich 1 ist.

7. Sensor nach einem der vorhergehenden Ansprüche, **dadurch gekennzeichnet, dass** die Lichtleitfaser (14) ein Indexprofil mit parabolischem Gradienten aufweist.

8. Sensor nach einem der Ansprüche 1 bis 6, **dadurch gekennzeichnet, dass** die Lichtleitfaser (14) eine Faser mit Indexsprung ist.

9. Sensor nach einem der vorhergehenden Ansprüche, **dadurch gekennzeichnet, dass** der Träger (1) und die Lichtleitfaser (14), die er trägt, in eine Hülle für mechanischen Schutz eingehüllt sind, deren Elastizitätseigenschaften an jene des Trägers (1) angepasst sind, wobei diese Hülle dazu dient, die zu messende Belastung an den Sensor zu übertragen und ihm die gesuchte Form zu verleihen.

10. Verfahren für die Herstellung eines Lichtleitfaser-Sensors nach einem der vorhergehenden Ansprüche, **dadurch gekennzeichnet, dass** auf dem die Lichtleitfaser (14) tragenden Träger (1, 20, 28) ein periodisches Gitter von Perforationen (12) ausgebildet wird, in die die Lichtleitfaser (14) eingefädelt ist, wobei diese Perforationen (12) in den Zonen mit stärkeren Beanspruchungen des Trägers (1) in bevorzugten Richtungen, die zur Krümmungsebene dieses Trägers (1) senkrecht sind, ausgebildet sind, wobei die Krümmungsebene die Ebene bezeichnet, die durch den Krümmungsradius (R) beschrieben ist, längs dessen der die Lichtleitfaser (14) tragende Träger (1) gekrümmt ist, und wobei die Perforationen (12) in den Zonen mit schwächeren Beanspruchungen des Trägers (1) in nicht bevorzugten Richtungen ausgebildet sind.

11. Belastungserfassungsvorrichtung, **dadurch gekennzeichnet, dass** sie einen Lichtleitfaser-Sensor nach einem der vorhergehenden Ansprüche 1 bis 9, eine Lichtquelle (36), um in die Lichtleitfaser (14) eine Lichtwelle zu schicken, und eine Photoerfassungsvorrichtung (38), die die Lieferung von Informationen bezüglich der von der Faser (14) übertragenen Lichtintensität ermöglicht, umfasst.

12. Vorrichtung nach Anspruch 11, **dadurch gekennzeichnet, dass** sie eine Referenz-Lichtleitfaser (48) verwendet, die keiner zu messenden Belastung, keiner zu messenden Kraft und keinem zu messenden Druck unterworfen ist, verwendet.

13. Vorrichtung nach Anspruch 12, **dadurch gekennzeichnet, dass** sie ein Radiometer umfasst.

14. Vorrichtung nach Anspruch 12, **dadurch gekennzeichnet, dass** sie eine Rückkopplung auf die Lichtquelle (36) umfasst, derart, dass der Polarisationsstrom der Lichtquelle gesteuert wird und ihre Leistung auf einem konstanten Pegel, der im Voraus mittels einer Stabilisierungsvorrichtung (52) definiert wird, gehalten wird.

15. Verfahren zum Eichen einer Belastungserfassungsvorrichtung nach einem der vorhergehenden Ansprüche 11 bis 14, **dadurch gekennzeichnet, dass** es die Schritte umfasst, die darin bestehen:

- bei Fehlen einer mechanischen Beanspruchung eine Änderung des Polarisationsstroms der Lichtquelle (36) zu befehlen, der ausreichend gering ist, um eine zu der Sendeleistung proportionale Veränderung zu erhalten, wobei diese Leistungsänderung anschließend mit der Änderung verglichen wird, die durch den Eichsensor unter den gleichen Bedingungen erzeugt wird, und

- den Ausgangspegel der Sensoren bei Fehlen einer Beanspruchung mittels einer einstellbaren Offset-Spannung stets auf den gleichen vorgegebenen Wert zu regeln.

**Claims**

1. Fibre-optical sensor for measuring a force being exerted on a substrate, including a support (1) carrying a multimode optical fibre (14) in which attenuation of the transmitted light is caused by a local modification in the angle of curvature or micro-curvature (16) of the fibre (14) via the effect of the force applied, said support (1) having zones of high and least stress and being curved to fit the curved substrate on which it is placed, wherein the support (1) carrying the optical fibre (14) has a periodic grating of perforations (12) in which the optical fibre (14) is threaded, the period and the cyclical ratio ($l_1/l_2$) of the micro-curvatures (16) of the fibre (14), which is defined as the ratio of the optical fibre (14) lengths $l_1$ and $l_2$ corresponding to two successive micro-curvatures (16), remaining constant, said perforations (12) being made in the high stress zones of the support (1) along privileged directions, which are perpendicular to plane of curvature of this support (1), the plane of curvature designating the plane described by the radius of curvature (R) along which the support (1) carrying the optical fibre (14) is curved, and said perforations (12) being made along non-privileged directions in the zones of least stress of the support (1).

2. Sensor according to claim 1, **characterised in that** the period of the grating of perforations (12) is selected so as to encourage coupling between guided modes in the core of the fibre (14), i.e. light rays which propagate in the core of the fibre (14) by successive reflections, and modes radiating towards the exterior of said fibre (14), i.e. light rays derived from the core of the fibre (14) and which propagate in the direction of the fibre sheath, such that, for a step index fibre, coupling will be observed between guided modes and radiating modes if:

$$2\pi/T \geq 1/\rho^2 \, kn_1 + 2\sqrt{\Delta/\rho}$$

where

T        is the period of the perforation grating,

| | |
|---|---|
| p | is the fibre core radius, |
| $k = 2\pi\lambda$ | is the propagation constant of the light modes, where $\lambda$ is the wavelength of said light modes, |
| $n_1$ | is the optical index of the fibre core, and |
| $\Delta = n_1 - n_2/n_1$ | is the relative difference of the material indices of core $n_1$ and sheath $n_2$ of the optical fibre |

such that, for a graded index fibre, coupling will be observed between guided modes and radiating modes, if:

$$T = \rho\pi \ \sqrt{2/\Delta}$$

3. Sensor according to any one of claims 1 or 2, **characterised in that** the support carrying the optical fibre (14) is a hollow tube (20), and **in that** the perforations (12) are made along non-privileged directions in the zones of least stress which extend on either side of the axial plane of symmetry of the tube (20) which is the plane passing through the longitudinal axis of symmetry of said tube.

4. Sensor according to claim 3, **characterised in that** a cylinder is introduced into the hollow tube (20) so as to form a solid tube.

5. Sensor according to claims 1 or 2, **characterised in that** the support carrying the optical fibre (14) is a thin strip (28) on which the perforation grating (12) is made along non-privileged directions, this strip (28) being inserted longitudinally between two sections of cylinder so as to form a solid tube (30).

6. Sensor according to any of the preceding claims, **characterised in that** the cyclical ratio ($l_1/l_2$) of the micro-curvatures (16) of the optical fibre (14) is equal to 1.

7. Sensor according to any of the preceding claims, **characterised in that** the optical fibre (14) has a parabolic graded index profile.

8. Sensor according to any of claims 1 to 6, **characterised in that** the optical fibre (14) is a step index fibre.

9. Sensor according to any of the preceding claims, **characterised in that** the support (1) and the optical fibre (14) that it carries are wrapped in a mechanical protective sheath whose elastic features are suited to those of said support (1), said sheath being used to transmit the force to be measured to said sensor and giving the latter the desired shape.

10. Method of manufacturing a fibre-optical sensor according to any of the preceding claims, **characterised in that** a periodic grating of perforations (12) is made on the support (1, 20, 28) carrying the optical fibre (14), into which the optical fibre (14) is threaded, said perforations (12) being made in the zones of high stress of the support (1) along privileged directions which are perpendicular to the plane of curvature of said support (1), the plane of curvature designating the plane described by the radius of curvature (R) along which the support (1) carrying the optical fibre (14) is curved, and said perforations (12) being made along non-privileged directions in the zones of least stress of the support (1).

11. Force detection device, **characterised in that** it includes a fibre-optical sensor according to any one of the preceding claims 1 to 9, a light source (36) for sending a light wave into the optical fibre (14), and a photodetection device (38) for delivering information relating to the luminous intensity transmitted by said fibre (14).

12. Device according to claim 11, **characterised in that** it uses a reference optical fibre (48), which is not subjected to the force or pressure to be measured.

13. Device according to claim 12, **characterised in that** it includes a ratiometer (50).

14. Device according to claim 12, **characterised in that** it includes a feedback on the light source (36) so as to check the polarisation current of the latter and to keep its power at a previously defined constant level by means of a stabilisation device (52).

15. Method for calibrating a force detection device according to any one of the preceding claims 11 to 14, **characterised in that** it includes the steps of:

- commanding, in the absence of mechanical stress, a sufficiently slight variation in the polarisation current of the light source (36) to be able to obtain a proportional variation in the transmission power, this power variation then being compared to the variation produced by a reference sensor in the same conditions, and
- adjusting, again in the absence of stress, the output level of the sensors to an identical predetermined value by means of an adjustable offset voltage.

Fig. 1

## Fig. 2

## Fig. 3

# Fig. 4

# Fig. 5

Fig. 6

Fig. 7

Fig. 8

Fig. 9

## Fig. 1 0

## Fig. 1 1

## Fig. 1 2

## Fig. 1 3

## Fig. 1 4